(19) Europäisches Patentamt
European Patent Office
Office européen des brevets

(11) EP 4 265 655 A1

(12) EUROPEAN PATENT APPLICATION
published in accordance with Art. 153(4) EPC

(43) Date of publication:
**25.10.2023 Bulletin 2023/43**

(21) Application number: **22887696.7**

(22) Date of filing: **28.10.2022**

(51) International Patent Classification (IPC):
***C08F 210/16*** *(2006.01)* ***C08F 210/14*** *(2006.01)*
***C08L 23/08*** *(2006.01)*

(52) Cooperative Patent Classification (CPC):
**C08F 210/14; C08F 210/16; C08L 23/08;**
Y02E 10/50

(86) International application number:
**PCT/KR2022/016694**

(87) International publication number:
**WO 2023/075501 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2021 KR 20210148244**

(71) Applicant: **Lg Chem, Ltd.**
**Seoul 07336 (KR)**

(72) Inventors:
- **GONG, Jin Sam**
  **Daejeon 34122 (KR)**
- **LEE, Eun Jung**
  **Daejeon 34122 (KR)**
- **JEONG, Jeong Yon**
  **Daejeon 34122 (KR)**
- **LEE, Young Woo**
  **Daejeon 34122 (KR)**
- **LEE, Jung Kyu**
  **Daejeon 34122 (KR)**
- **LEE, Si Jung**
  **Daejeon 34122 (KR)**
- **LEE, Hye Ji**
  **Daejeon 34122 (KR)**

(74) Representative: **Hoffmann Eitle**
**Patent- und Rechtsanwälte PartmbB**
**Arabellastraße 30**
**81925 München (DE)**

# (54) ETHYLENE/ALPHA-OLEFIN COPOLYMER AND COMPOSITION FOR SEALANT FILM COMPRISING SAME

(57) The present invention relates to an ethylene/alpha-olefin copolymer having excellent physical properties showing reduced immersion time of a crosslinking agent and a high degree of crosslinking, and a composition for an encapsulant film, comprising the same.

FIG. 1

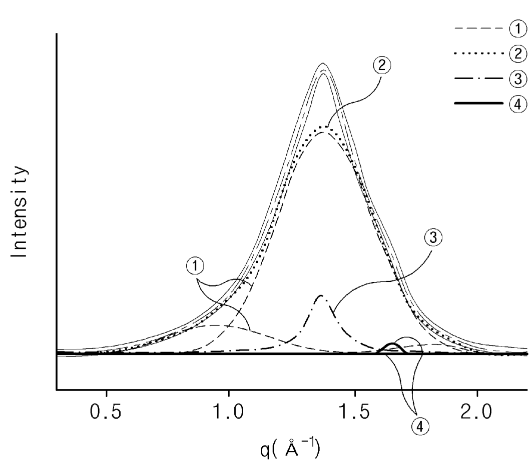


EP 4 265 655 A1

## Description

## TECHNICAL FIELD

### Cross-reference to Related Applications

This application claims the benefit of Korean Patent Application No. 2021-0148244, filed on November 1, 2021, in the Korean Intellectual Property Office, the contents of which are incorporated herein by reference.

### Technical Field

The present invention relates to an ethylene/alpha-olefin copolymer having excellent physical properties showing reduced immersion time of a crosslinking agent and a high degree of crosslinking, and a composition for an encapsulant film, comprising the same.

## BACKGROUND ART

As global environmental problems, energy problems, etc. get worse and worse, solar cells receive attention as an energy generating means without fear of environmental contamination and exhaustion. If solar cells are used outside such as the roof of a building, generally, a module type of the solar cells is used. In order to obtain a crystalline solar cell module when manufacturing a solar cell module, front glass/solar cell encapsulant/crystalline solar cell device/solar cell encapsulant/rear glass (or rear protection sheet) are stacked in order. As the encapsulant of the solar cells, generally, an ethylene/vinyl acetate copolymer or ethylene/alpha-olefin copolymer having excellent transparency, flexibility, adhesiveness, etc. is used.

Studies on solar cell encapsulants are steadily conducted to improve commonly required functions, and the degree of crosslinking among various physical properties of the ethylene/alpha-olefin copolymer may be used as an index showing mechanical strength and the evaluation of heat resistance. If the degree of crosslinking increases, if used in an encapsulant, or the like, mechanical strength and heat resistance may be excellent, the stability of a module may become high for a long time.

Meanwhile, the solar cell is generally placed in poor surroundings, particularly, in a hot and humid area, and continuous studies on a method that may effectively protect a solar cell module and prevent defects such as the deterioration of output in such surroundings are required. Particularly, the degree of crosslinking is required to improve so as to improve mechanical strength and heat resistance, but polar materials such as a crosslinking agent, a crosslinking auxiliary agent and a peroxide, used for the crosslinking have low affinity with the ethylene/alpha-olefin copolymer, and immersion time of a crosslinking component increases, and there are limits in improving the degree of crosslinking.

[Prior Art Document]

[Patent Document]

(Patent Document 1) Japanese Laid-open Patent No. 2010-258439

## DISCLOSURE OF THE INVENTION

## TECHNICAL PROBLEM

An object of the present invention is to provide an ethylene/alpha-olefin copolymer having excellent physical properties showing reduced immersion time of a crosslinking agent and a high degree of crosslinking, and a method for preparing the same.

## TECHNICAL SOLUTION

To solve the above tasks, the present invention provides an ethylene/alpha-olefin copolymer and a composition for an encapsulant film, comprising the same.

(1) The present invention provides an ethylene/alpha-olefin copolymer satisfying the following conditions (a) to (d) :

(a) a d-spacing measured by small-angle X-ray scattering (SAXS): 12 nm or more;

(b) crystallinity measured by wide-angle X-ray scattering (WAXS): 14% or less;
(c) hardness (shore A) measured in conditions of 40°C: 65 or less; and
(d) a melting temperature measured by differential scanning calorimetry (DSC): 70°C or less.

(2) The present invention provides the ethylene/alpha-olefin copolymer in (1), wherein the crystallinity is 130 or less.
(3) The present invention provides the ethylene/alpha-olefin copolymer in (1) or (2), wherein the hardness (shore A) is 63 or less.
(4) The present invention provides the ethylene/alpha-olefin copolymer in any one among (1) to (3), wherein the melting temperature is 50 to 65°C.
(5) The present invention provides the ethylene/alpha-olefin copolymer in any one among (1) to (4), wherein a density is 0.85 to 0.89 g/cc.
(6) The present invention provides the ethylene/alpha-olefin copolymer in any one among (1) to (5), wherein a melt index (MI, 190°C, 2.16 kg load conditions) is 1 to 100 dg/min.
(7) The present invention provides the ethylene/alpha-olefin copolymer in any one among (1) to (6), wherein a melt flow rate ratio (MFRR, $MI_{10}/MI_{2.16}$) which is a value of a melt index ($MI_{10}$, 190°C, 10 kg load conditions) with respect to a melt index ($MI_{2.16}$, 190°C, 2.16 kg load conditions) is 8.0 or less.
(8) The present invention provides the ethylene/alpha-olefin copolymer in any one among (1) to (7), wherein the alpha-olefin comprises one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene and 1-eicosene.
(9) The present invention provides the ethylene/alpha-olefin copolymer in any one among (1) to (8), wherein the alpha-olefin is comprised in greater than 0 to 99 mol% based on the ethylene/alpha olefin copolymer.
(10) The present invention provides a composition for an encapsulant film, comprising the ethylene/alpha-olefin copolymer of any one among (1) to (9).

## ADVANTAGEOUS EFFECTS

The ethylene/alpha-olefin copolymer of the present invention has a high ratio of an amorphous region and shows low crystallinity. Accordingly, the ethylene/alpha-olefin copolymer shows high absorbency, is immersed in a crosslinking agent in a short time and shows an excellent degree of crosslinking.

## BRIEF DESCRIPTION OF DRAWING

FIG. 1 shows the deconvolution results of peaks in Example 1.

## BEST MODE FOR CARRYING OUT THE INVENTION

Hereinafter, the present invention will be described in more detail to assist the understanding of the present invention.
It will be understood that words or terms used in the present disclosure and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.
Hereinafter, the present invention will be explained in detail.

### <Ethylene/alpha-olefin copolymer>

The ethylene/alpha-olefin copolymer of the present invention is characterized in satisfying conditions (a) to (d) below.

(a) a d-spacing measured by small-angle X-ray scattering (SAXS): 12 nm or more;
(b) crystallinity measured by wide-angle X-ray scattering (WAXS): 14% or less;
(c) hardness (shore A) measured in conditions of 40°C: 65 or less; and
(d) a melting temperature measured by differential scanning calorimetry (DSC): 70°C or less.

The ethylene/alpha-olefin copolymer of the present invention has low crystallinity and a high ratio of an amorphous region, and shows excellent absorbency of a polar material such as a crosslinking agent and a crosslinking

auxiliary agent.

Particularly, the ethylene/alpha-olefin copolymer of the present invention is prepared by injecting a transition metal compound, a cocatalyst, ethylene and an alpha-olefin-based monomer in a polymerization reactor, and then, polymerizing, and particularly, the injection amount of the alpha-olefin-based monomer with respect to the ethylene is high, the ratio of an amorphous region in the ethylene/alpha-olefin copolymer is high, and a distance between crystalline regions is broad.

The ethylene/alpha-olefin copolymer of the present invention has a d-spacing measured by small-angle X-ray scattering (SAXS) of 12 nm or more.

The d-spacing represents a d-spacing between domains in a crystal structure, and if a d-spacing value is small, it means that a d-spacing between crystal structures is close, and crystallinity is high.

The d-spacing may be measured by small-angle X-ray scattering (SAXS). Particularly, scattering strength (I(q)) in accordance with scattering vector (q) was measured by transmitting X-ray through a specimen using a model name of Xeuss 2.0 X-ray scattering equipment of Xenocs Co. More particularly, the measurement of the small-angle X-ray scattering (SAXS) was performed by putting a specimen at a position separated by 2.5 m from a detector and irradiating X-ray, and Pilatus3 300K (2D detector) was used as the detector. A 2D diffraction pattern scattered out was obtained as an image and calibrated using a sample-to-detector distance obtained through a standard specimen. After that, scattering strength (I(q)) in accordance with scattering vector (q) was converted by circular averaging using the 2D diffraction pattern obtained through the analysis of the specimen.

[General Formula 1]

$$q = 4\pi \sin\theta / \lambda$$

In General Formula 1,

q is scattering vector, $\theta$ is the 1/2 value of a scattering angle, and $\lambda$ is the wavelength of irradiated X-ray.

The d-spacing between crystal domains was analyzed by measuring scattering strength (I(q)) in accordance with scattering vector (q) obtained through SAXS. By crossing the scattering strength (I(q)) with the square of the scattering vector (q), peaks are observed on a graph of $I(q) \times q^2$ in accordance with scattering vector (q). In this case, by using the scattering vector value (q*) of the observed peak, the d-spacing between crystal domains was obtained.

[General Formula 2]

$$\text{d-spacing} = 2\pi / q^*$$

In General Formula 2,

q* represents a scattering vector value in a peak on the graph of $I(q) \times q^2$ in accordance with scattering vector (q).

The ethylene/alpha-olefin copolymer of the present invention has a high ratio of an amorphous region and low crystallinity, and a d-spacing is shown by 12 nm or more. If the range of the d-spacing is 12 nm or more, the absorbency of the ethylene/alpha-olefin copolymer with respect to a crosslinking agent component increases, and there are advantages in immersing a large amount of a crosslinking agent in a short time.

The ethylene/alpha-olefin copolymer of the present invention may have the degree of crystallinity measured by wide-angle X-ray scattering (WAXS) of 14% or less, particularly, 130 or less, or 120 or less.

The ethylene/alpha-olefin copolymer of the present invention shows the degree of crystallinity in a low range as the above-described range.

The degree of crystallinity may be measured by wide-angle X-ray scattering (WAXS). Scattering strength (I(q)) in accordance with scattering vector (q) was measured by transmitting X-ray through a specimen using a model name of Xeuss 2.0 X-ray scattering equipment of Xenocs Co. More particularly, the measurement of the wide-angle X-ray scattering (SAXS) was performed by putting a specimen at a position separated by about 0.7 m from a detector and irradiating X-ray, and Pilatus3 300K (2D detector) was used as the detector. The WAXS is a parallel beam method with the principle of the measurement of the diffraction of X-ray generated by the collision with the specimen during the transmission, and the degree of crystallinity is obtained by assigning peaks derived from a crystal structure and calculating how much the region of crystal peaks occupies in contrast to a total region.

Particularly, scattering or diffraction strength (I(q)) in accordance with scattering vector (q) obtained through WAXS was measured and analyzed. From the scattering or diffraction strength obtained, diffraction peaks by amorphous halo (Ia(q)), mesophase (Im(q)) and crystal (Ic(q)) were deconvoluted, and through this, the degree of crystallinity was calculated according to [General Formula 3] below.

[General Formula 3]

$$\text{Degree of crystallinity} = \frac{\int (I_m + I_c) q^2 \, dq}{\int (I_a + I_m + I_c) q^2 \, dq}$$

In General Formula 3,

$I_m$ is a mesophase peak,
$I_c$ is a crystal peak, and
$I_a$ is an amorphous halo peak.

If the degree of crystallinity of the ethylene/alpha-olefin copolymer of the present invention is in the range, the relative amorphous content in the copolymer increases, the absorbency of a crosslinking agent component increases, and the immersion of the crosslinking agent component is possible in a short time.

The ethylene/alpha-olefin copolymer of the present invention has hardness (shore A) measured under the conditions of 40°C of 65 or less, particularly, 63 or less, 62 or less, or 61 or less.

The hardness represents the shore A hardness according to ASTM D 2240 standard. The ethylene/alpha-olefin copolymer of the present invention contains the amorphous region a lot, and the immersion rate of a polar material such as a crosslinking agent is rapid, and thus, the hardness measured at 40°C that is an immersion temperature is a low value as above.

If the hardness (shore A) of the ethylene/alpha-olefin copolymer of the present invention, measured under the conditions of 40°C is in the above-described range, the penetration of the crosslinking agent component into the ethylene/alpha-olefin copolymer is easy, and there are advantages of reducing the immersion time of the crosslinking agent component.

The ethylene/alpha-olefin copolymer of the present invention has a melting temperature (Tm) measured by differential scanning calorimetry (DSC) of 70°C or less, particularly, 65°C or less, 60°C or less, or 58°C or less, and 45°C or higher, or 50°C or higher.

If the melting temperature of the ethylene/alpha-olefin copolymer of the present invention is in the above-described range, excellent thermal stability is shown, the deterioration of light transmittance by a highly crystalline region having a high melting temperature is not shown, and there are advantages of accomplishing the excellent level of light transmittance.

The melting temperature is measured using differential scanning calorimetry (DSC). Particularly, a copolymer is heated to 150°C, this temperature is maintained for 5 minutes, the temperature is decreased again to 20°C, and the temperature is elevated again. In this case, the elevation rate and decreasing rate of the temperature is controlled to 10°C/min, respectively, and the measured results in a section where the temperature is secondly elevated could be measured as the melting temperature.

The ethylene/alpha-olefin copolymer of the present invention is a polymer having a low density having a density in a range of 0.85 to 0.89 g/cc, and in this case, the density may mean a density measured according to ASTM F-792. Particularly, the density may be 0.850 g/cc or more, 0.860 g/cc or more, or 0.870 g/cc or more, or 0.8874 g/cc or more, and may be 0.890 g/cc or less, 0.880 g/cc or less, or 0.879 g/cc or less.

If the ethylene/alpha-olefin copolymer of the present invention has the density in the above-described range, excellent crosslinking properties may be shown, physical properties such as volume resistance and light transmittance may not be deteriorated, and the ethylene/alpha-olefin copolymer may be usefully used as an insulating material.

The ethylene/alpha-olefin copolymer of the present invention has a melt index (MI, 190°C, 2.16 kg load conditions) of 1 to 30 dg/min. Particularly, the melt index may be 1 dg/min or more, 2 dg/min or more, 3 dg/min or more, or 4 dg/min or more, and 30 dg/min or less, 20 dg/min or less, or 15 dg/min or less.

If the ethylene/alpha-olefin copolymer of the present invention has a melt index in the above-described range, suitable production rate may be shown, volume resistance and light transmittance may be excellent, and the ethylene/alpha-olefin copolymer may be usefully used as an insulating material.

The ethylene/alpha-olefin copolymer of the present invention may have a melt flow rate ratio (MFRR, $MI_{10}/MI_{2.16}$) which is a value of melt index ($MI_{10}$, 190°C, and 10 kg load conditions) with respect to the melt index ($MI_{2.16}$, 190°C, and 2.16 kg load conditions) of 8.0 or less, particularly, 4.0 or more, 4.2 or more, or 4.5 or more, and 8.0 or less, or 7.5 or less.

The melt flow rate ratio is an index of the degree of long chain branching of a copolymer, and the ethylene/alpha-olefin copolymer of the present invention satisfies the melt flow rate ratio together with the above-described physical properties and has excellent physical properties, and thus, may be suitably applied to an encapsulant composition for a solar cell with excellent physical properties.

Particularly, if the ethylene/alpha-olefin copolymer of the present invention has a low melt index of 1 to 100 dg/min as described above, the melt flow rate ratio may be low and 8.0 or less. Since the copolymer of the present invention has such a low melt index and melt flow rate ratio, the copolymer is characterized in having a high molecular weight, the small long chain branch content, and an excellent degree of crosslinking.

The ethylene/alpha-olefin copolymer of the present invention is prepared by copolymerizing ethylene and an alpha-olefin-based monomer, and in this case, the alpha-olefin which means a moiety derived from an alpha-olefin-based monomer in the copolymer may be C4 to C20 alpha-olefin, particularly, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, etc., and any one among them or mixtures of two or more thereof may be used.

Among them, the alpha-olefin may be 1-butene, 1-hexene or 1-octene, preferably, 1-butene, 1-hexene, or the combinations thereof.

In addition, in the ethylene/alpha-olefin copolymer, the alpha-olefin content may be suitably selected in the range satisfying the physical conditions, particularly, greater than 0 to 99 mol%, or 10 mol% or more, 50 mol% or more, without limitation.

**<Method for preparing ethylene/alpha-olefin copolymer>**

The ethylene/alpha-olefin copolymer of the present invention is prepared by a preparation method including a step of injecting a transition metal compound, a cocatalyst, ethylene and an alpha-olefin-based monomer in a polymerization reactor, and polymerizing.

The method for polymerizing ethylene and an alpha-olefin-based monomer is not specifically limited, but common methods widely used in this technical field may be suitably used.

In the present invention, the alpha-olefin-based monomer may be one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene, and 1-eicosene, without limitation.

Among them, considering the use of the ethylene/alpha-olefin copolymer prepared in the present invention and the improving effects thereof, the alpha-olefin-based monomer may be 1-butene, 1-hexene or 1-octene.

Particularly, in the preparation method of the present invention, the mole ratio of the ethylene and the alpha-olefin-based monomer may be 1: 1.14 to 1: 3.00, particularly, 1: 1.14 to 1: 2.00, 1: 1.14 to 1: 1.50, 1: 1.14 to 1: 1.30, or 1: 1.14 to 1: 1.25.

If the mole ratio of the ethylene and the alpha-olefin-based monomer is in the range, an ethylene/alpha-olefin copolymer having the high ratio of an amorphous region is prepared due to a large amount of the alpha-olefin-based monomer, and at the same time, if the alpha-olefin-based monomer is used too much, a crystalline region is too little, and there are problems in that it is difficult to process due to the sagging of a film during forming the film, the rigidity of the film is deteriorated after the formation, and it is difficult to store due to the stickiness of the surface of the film.

In addition, the conditions of (a) to (d) of the ethylene/alpha-olefin copolymer, defined in the present invention correspond to physical properties accomplished by controlling the mole ratio of the ethylene and the alpha-olefin-based monomer to a suitable level as described above. Particularly, if the alpha-olefin-based monomer is small in contrast to the ethylene, a crystalline region in the copolymer increases, a melting temperature increases, the degree of crystallinity increases, and the d-spacing decreases, and thus, the conditions (b) to (d) defined in the present invention may be unsatisfied. On the contrary, if the alpha-olefin-based monomer is excessive in contrast to the ethylene, a crystalline region is reduced to deteriorate rigidity, and normal processing of a film becomes impossible, and there may induce problems of difficult utilization as a composition for an encapsulant film.

In addition, the transition metal compound used for polymerization may be a compound represented by Formula 1, a compound represented by Formula 2 or a combination thereof, without limitation.

[Formula 1]

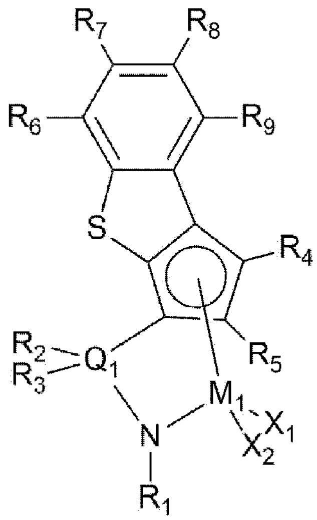

In Formula 1,

$R_1$ is hydrogen; alkyl of 1 to 20 carbon atoms; cycloalkyl of 3 to 20 carbon atoms; alkenyl of 2 to 20 carbon atoms; alkoxy of 1 to 20 carbon atoms; aryl of 6 to 20 carbon atoms; arylalkoxy of 7 to 20 carbon atoms; alkylaryl of 7 to 20 carbon atoms; or arylalkyl of 7 to 20 carbon atoms,
$R_2$ and $R_3$ are each independently hydrogen; halogen; alkyl of 1 to 20 carbon atoms; cycloalkyl of 3 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamido of 1 to 20 carbon atoms; or arylamido of 6 to 20 carbon atoms,
$R_4$ and $R_5$ are each independently hydrogen; alkyl of 1 to 20 carbon atoms; cycloalkyl of 3 to 20 carbon atoms; aryl of 6 to 20 carbon atoms; or alkenyl of 2 to 20 carbon atoms,
$R_6$ to $R_9$ are each independently hydrogen; alkyl of 1 to 20 carbon atoms; cycloalkyl of 3 to 20 carbon atoms; aryl of 6 to 20 carbon atoms; or alkenyl of 2 to 20 carbon atoms,
two or more adjacent groups among $R_2$ to $R_9$ may be connected with each other to form a ring,
$Q_1$ is Si, C, N, P or S,
$M_2$ is Ti, Hf or Zr, and
$X_1$ and $X_2$ are each independently hydrogen; halogen; alkyl of 1 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamino of 1 to 20 carbon atoms; or arylamino of 6 to 20 carbon atoms.

[Formula 2]

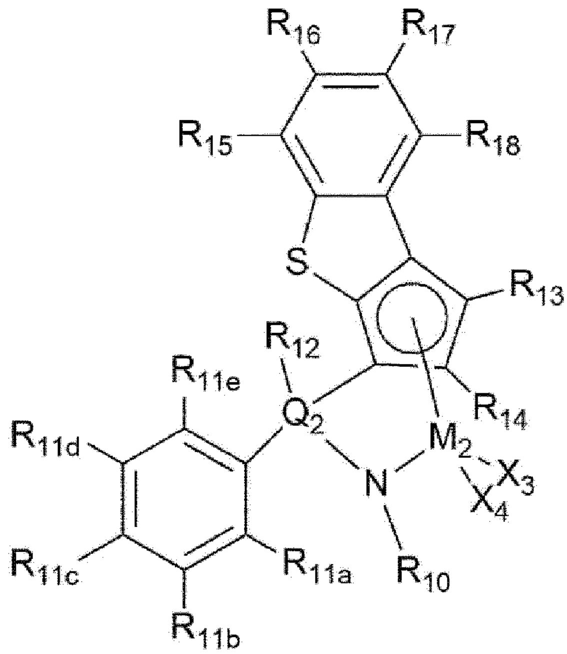

In Formula 2,

$R_{10}$ is hydrogen; alkyl of 1 to 20 carbon atoms; cycloalkyl of 3 to 20 carbon atoms; alkenyl of 2 to 20 carbon atoms; alkoxy of 1 to 20 carbon atoms; aryl of 6 to 20 carbon atoms; arylalkoxy of 7 to 20 carbon atoms; alkylaryl of 7 to 20 carbon atoms; or arylalkyl of 7 to 20 carbon atoms,
$R_{11a}$ to $R_{11e}$ are each independently hydrogen; halogen; alkyl of 1 to 20 carbon atoms; cycloalkyl of 3 to 20 carbon atoms; alkenyl of 2 to 20 carbon atoms; alkoxy of 1 to 20 carbon atoms; or aryl of 6 to 20 carbon atoms,
$R_{12}$ is hydrogen; halogen; alkyl of 1 to 20 carbon atoms; cycloalkyl of 3 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamido of 1 to 20 carbon atoms; or arylamido of 6 to 20 carbon atoms,
$R_{13}$ and $R_{14}$ are each independently hydrogen; alkyl of 1 to 20 carbon atoms; cycloalkyl of 3 to 20 carbon atoms; aryl of 6 to 20 carbon atoms; or alkenyl of 2 to 20 carbon atoms,
$R_{15}$ to $R_{18}$ are each independently hydrogen; alkyl of 1 to 20 carbon atoms; cycloalkyl of 3 to 20 carbon atoms; aryl of 6 to 20 carbon atoms; or alkenyl of 2 to 20 carbon atoms,
two or more adjacent groups among $R_{15}$ to $R_{18}$ may be connected with each other to form a ring,
$Q_2$ is Si, C, N, P or S,
$M_2$ is Ti, Hf or Zr, and
$X_3$ and $X_4$ are each independently hydrogen; halogen; alkyl of 1 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamino of 1 to 20 carbon atoms; or arylamino of 6 to 20 carbon atoms.

In the present invention, the transition metal compound represented by Formula 1 and the transition metal compound represented by Formula 2 form a structure in which cyclopentadiene to which benzothiophene is fused by a cyclic type bond, and an amido group (N-$R_2$, N-$R_{10}$) are stably crosslinked by $Q_1$ or $Q_2$, and a transition metal in group 4 is coordination bonded.

In the case where the transition metal compound represented by Formula 1 is used as a catalyst in the polymerization reaction of ethylene and an alpha-olefin based monomer, the preparation of a copolymer having high activity, a high molecular weight and high copolymerization properties is possible even at a high polymerization temperature. Particularly, because of the structural feature of the catalyst, the introduction of the alpha-olefin-based monomer is difficult, and a copolymer in a high-density region tends to be prepared. On the contrary, the transition metal compound of Formula 2 could introduce a large amount of alpha-olefin, and a polymer in an ultra low-density region (elastomer) could be prepared.

Like this, the transition metal compounds prepared as Formula 1 and Formula 2, used in the present invention

are mixed and used in a catalyst composition. As described above, if the transition metal compound of Formula 1 or Formula 2 is used solely, copolymerization properties of mixing of the alpha-olefin-based monomer are different. If these are mixed to prepare a copolymer, a copolymer in which both a low-density region in which a large amount of the alpha-olefin-based monomer is mixed and a high-density region in which a small amount of the alpha-olefin-based monomer are present, could be prepared. This means that the crystallinity distribution of a copolymer is high, and free volume is low, and thus, charge mobility is shown low to show excellent physical properties with high electrical insulation.

In the present invention, the mole ratio of the transition metal compounds represented by Formula 1 and Formula 2 is characterized in being 1: 1.2 to 1: 10, or 1: 1.5 to 1: 9, or 1: 1.5 to 1: 7, 1: 2 to 1: 7, 1: 2 to 1: 5, or 1: 2 to 1: 3.

If the transition metal compound represented by Formula 1 is used solely, if the transition metal compound represented by Formula 1 is excessive, deviated from the mole ratio, if the transition metal compound represented by Formula 2 is used solely, or if the transition metal compound represented by Formula 2 is excessive, deviated from the mole ratio, crystallinity distribution may be low, and a copolymer having not good electrical insulation may be prepared.

In the present invention, the polymerization reaction may be performed by continuously polymerizing ethylene and an alpha-olefin-based monomer by continuously injecting hydrogen in the presence of the catalyst composition, particularly, may be performed by injecting hydrogen in 10 to 100 cc/min.

The hydrogen gas plays the role of suppressing the rapid reaction of the transition metal compound at an initial stage of polymerization and terminating polymerization reaction. Accordingly, by controlling the use of such a hydrogen gas or the amount used thereof, an ethylene/alpha-olefin copolymer having narrow molecular weight distribution could be effectively prepared.

For example, the hydrogen may be injected in 10 cc/min or more, 15 cc/min or more, 19 cc/min or more, or 22 cc/min or more, and at the same time, 100 cc/min or less, 50 cc/min or less, or 45 cc/min or less, or 35 cc/min or less, or 29 cc/min or less. If injected in the above-described conditions, the ethylene/alpha-olefin polymer prepared may achieve the physical properties in the present invention.

If the hydrogen gas is injected in an amount of less than 10 cc/min, the termination of the polymerization reaction occurs non-uniformly, and the preparation of an ethylene/alpha-olefin copolymer having desired physical properties may be difficult, and if the hydrogen gas is injected in greater than 100 cc/min, the termination reaction occurs too quickly, and it is apprehended that an ethylene/alpha-olefin copolymer having a very low molecular weight might be prepared.

In addition, the polymerization reaction may be performed at 100 to 200°C, and by controlling the polymerization temperature with the injection amount of hydrogen, the number of unsaturated functional groups in the ethylene/alpha-olefin copolymer and molecular weight distribution may be controlled easily even further. Particularly, the polymerization reaction may be performed at 100 to 200°C, 120 to 180°C, 130 to 170°C, or 135 to 150°C.

Particularly, in Formula 1, $R_1$ is hydrogen; alkyl of 1 to 20 carbon atoms; cycloalkyl of 3 to 20 carbon atoms; alkenyl of 2 to 20 carbon atoms; alkoxy of 1 to 20 carbon atoms; aryl of 6 to 20 carbon atoms; arylalkoxy of 7 to 20 carbon atoms; alkylaryl of 7 to 20 carbon atoms; or arylalkyl of 7 to 20 carbon atoms, and more particularly, $R_1$ may be methyl, ethyl, propyl, butyl, isobutyl, tert-butyl, isopropyl, cyclohexyl, benzyl, phenyl, methoxyphenyl, ethoxyphenyl, fluorophenyl, bromophenyl, chlorophenyl, dimethylphenyl or diethylphenyl.

Particularly, in Formula 1, $R_2$ and $R_3$ are each independently hydrogen; halogen; alkyl of 1 to 20 carbon atoms; cycloalkyl of 3 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamido of 1 to 20 carbon atoms; or arylamido of 6 to 20 carbon atoms, and more particularly, $R_2$ and $R_3$ may be each independently hydrogen; alkyl of 1 to 20 carbon atoms; aryl of 6 to 20 carbon atoms; alkylaryl of 6 to 20 carbon atoms; or arylalkyl of 7 to 20 carbon atoms.

Particularly, in Formula 1, $R_4$ and $R_5$ may be the same or different, and may be each independently hydrogen; alkyl of 1 to 20 carbon atoms; cycloalkyl of 3 to 20 carbon atoms; aryl of 6 to 20 carbon atoms; or alkenyl of 2 to 20 carbon atoms, more particularly, alkyl of 1 to 6 carbon atoms. More particularly, $R_4$ and $R_5$ may be methyl, ethyl or propyl.

Particularly, in Formula 1, $R_6$ to $R_9$ may be the same or different and may be each independently hydrogen; alkyl of 1 to 20 carbon atoms; cycloalkyl of 3 to 20 carbon atoms; aryl of 6 to 20 carbon atoms; or alkenyl of 2 to 20 carbon atoms. More particularly, $R_6$ to $R_9$ may be the same or different and may be each independently hydrogen or methyl.

Two or more adjacent groups among $R_6$ to $R_9$ may be connected with each other to form an aliphatic ring of 5 to 20 carbon atoms or an aromatic ring of 6 to 20 carbon atoms, and the aliphatic ring or aromatic ring may be substituted with halogen, alkyl of 1 to 20 carbon atoms, alkenyl of 2 to 20 carbon atoms or aryl of 6 to 20 carbon atoms.

Particularly, in Formula 1, $Q_1$ is Si, C, N, P or S, and more particularly, $Q_1$ may be Si.

Particularly, in Formula 1, $M_1$ may be Ti, Hf or Zr.

Particularly, in Formula 1, $X_1$ and $X_2$ may be the same or different and may be each independently hydrogen; halogen; alkyl of 1 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamino of 1 to 20 carbon atoms; or arylamino of 6 to 20 carbon atoms.

In addition, the compound represented by Formula 1 may be a compound represented by any one among the

compounds below.

[Formula 1-1]

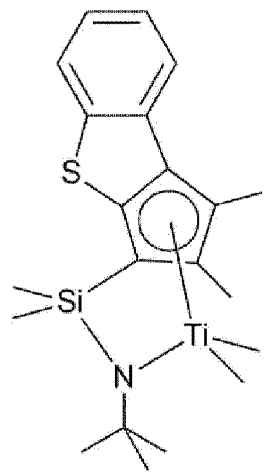

[Formula 1-2]

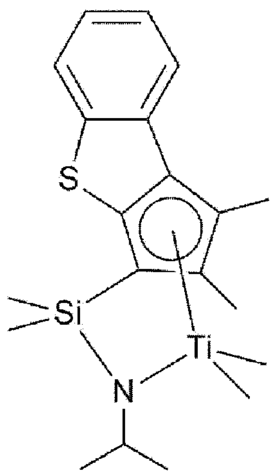

[Formula 1-3]

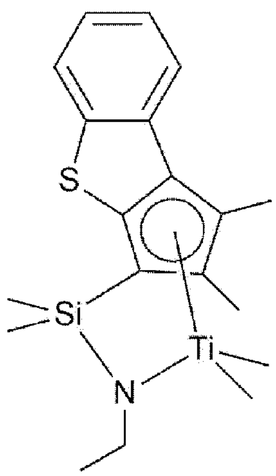

[Formula 1-4]

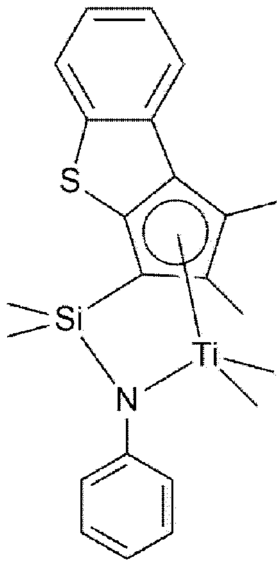

[Formula 1-5]

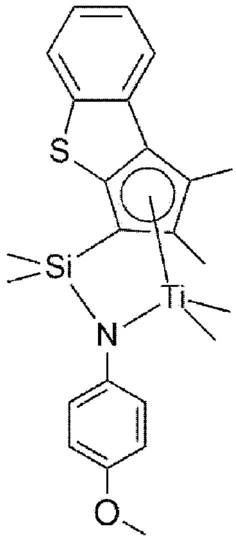

[Formula 1-6]

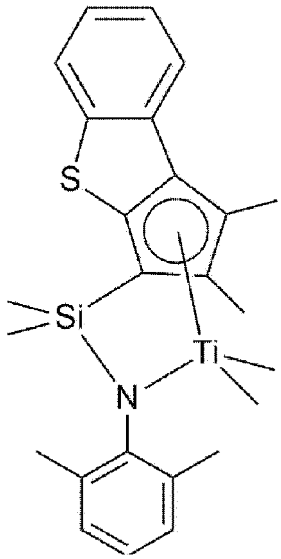

Besides, the compounds may have various structures within the range defined in Formula 1.

In addition, in Formula 2, $R_{10}$ is hydrogen; alkyl of 1 to 20 carbon atoms; cycloalkyl of 3 to 20 carbon atoms; alkenyl of 2 to 20 carbon atoms; alkoxy of 1 to 20 carbon atoms; aryl of 6 to 20 carbon atoms; arylalkoxy of 7 to 20 carbon atoms; alkylaryl of 7 to 20 carbon atoms; or arylalkyl of 7 to 20 carbon atoms, and more particularly, $R_{10}$ may be hydrogen; alkyl of 1 to 20 carbon atoms or 1 to 12 carbon atoms; alkoxy of 1 to 20 carbon atoms; aryl of 6 to 20 carbon atoms; arylalkoxy of 7 to 20 carbon atoms; alkylaryl of 7 to 20 carbon atoms; or arylalkyl of 7 to 20 carbon atoms.

Particularly, in Formula 2, $R_{11a}$ to $R_{11e}$ are each independently hydrogen; halogen; alkyl of 1 to 20 carbon atoms; cycloalkyl of 3 to 20 carbon atoms; alkenyl of 2 to 20 carbon atoms; alkoxy of 1 to 20 carbon atoms; or aryl of 6 to 20 carbon atoms, more particularly, hydrogen; halogen; alkyl of 1 to 12 carbon atoms; cycloalkyl of 3 to 12 carbon atoms; alkenyl of 2 to 12 carbon atoms; alkoxy of 1 to 12 carbon atoms; or phenyl.

Particularly, in Formula 2, $R_{12}$ is hydrogen; halogen; alkyl of 1 to 20 carbon atoms; cycloalkyl of 3 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamido of 1 to 20 carbon atoms; or arylamido of 6 to 20 carbon atoms, more particularly, hydrogen; halogen; alkyl of 1 to 12 carbon atoms; cycloalkyl of 3 to 12 carbon atoms; alkenyl of 2 to 12 carbon atoms; or phenyl.

Particularly, in Formula 2, $R_{13}$ and $R_{14}$ are each independently hydrogen; alkyl of 1 to 20 carbon atoms; cycloalkyl of 3 to 20 carbon atoms; aryl of 6 to 20 carbon atoms; or alkenyl of 2 to 20 carbon atoms, more particularly, hydrogen; or alkyl of 1 to 12 carbon atoms.

Particularly, in Formula 2, $R_{15}$ to $R_{18}$ are each independently hydrogen; alkyl of 1 to 20 carbon atoms; cycloalkyl of 3 to 20 carbon atoms; aryl of 6 to 20 carbon atoms; or alkenyl of 2 to 20 carbon atoms, more particularly, hydrogen; alkyl of 1 to 12 carbon atoms; or cycloalkyl of 3 to 12 carbon atoms, or hydrogen; or methyl.

Particularly, in Formula 2, two or more adjacent groups among $R_{15}$ to $R_{18}$ may be connected with each other to form a ring.

Particularly, in Formula 2, $Q_2$ is Si, C, N, P or S, more particularly, Q may be Si.

Particularly, in Formula 2, $X_3$ and $X_4$ are each independently hydrogen; halogen; alkyl of 1 to 20 carbon atoms; alkenyl of 2 to 20 carbon atoms; aryl of 6 to 20 carbon atoms; alkylaryl of 7 to 20 carbon atoms; arylalkyl of 7 to 20 carbon atoms; alkylamino of 1 to 20 carbon atoms; or arylamino of 6 to 20 carbon atoms, particularly, hydrogen; halogen; alkyl of 1 to 12 carbon atoms; cycloalkyl of 3 to 12 carbon atoms; or alkenyl of 2 to 12 carbon atoms, more particularly, hydrogen; or alkyl of 1 to 12 carbon atoms.

In addition, the compound represented by Formula 2 may be any one among the compounds represented by Formula 2-1 to Formula 2-10 below.

[Formula 2-1]

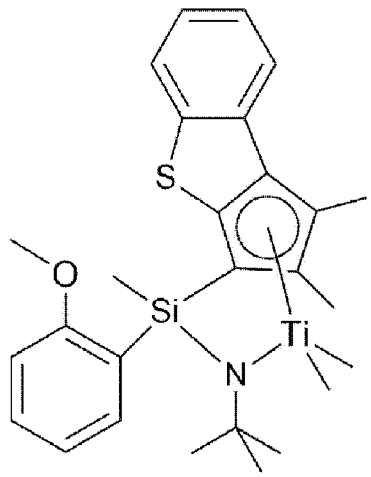

[Formula 2-2]

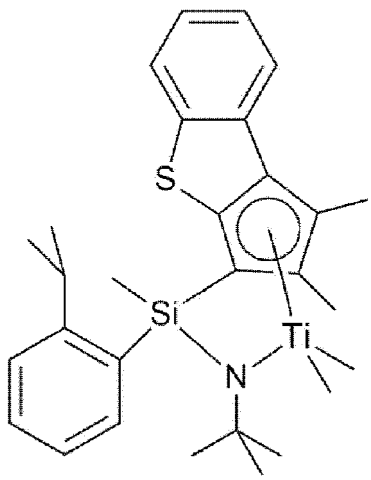

[Formula 2-3]

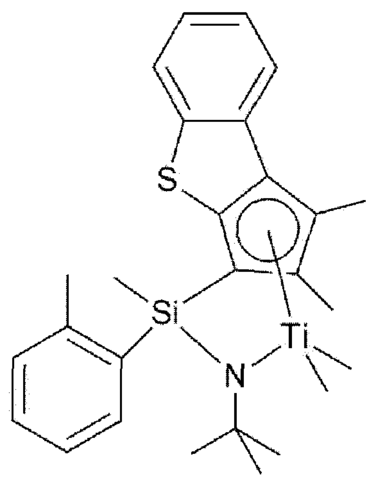

[Formula 2-4]

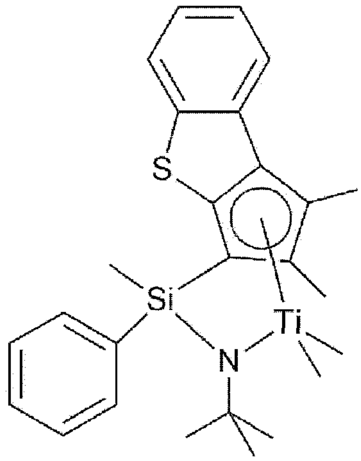

[Formula 2-5]

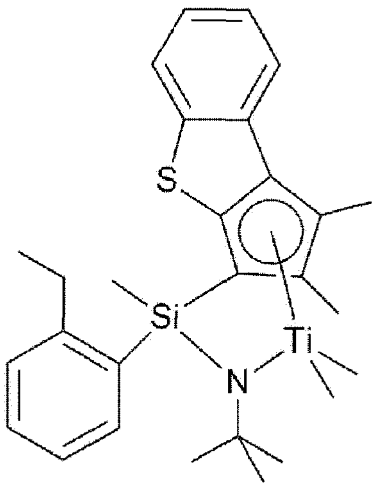

[Formula 2-6]

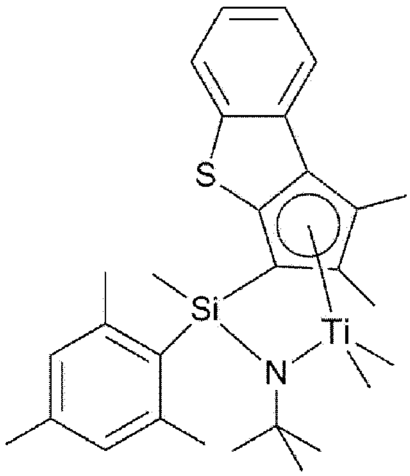

[Formula 2-7]

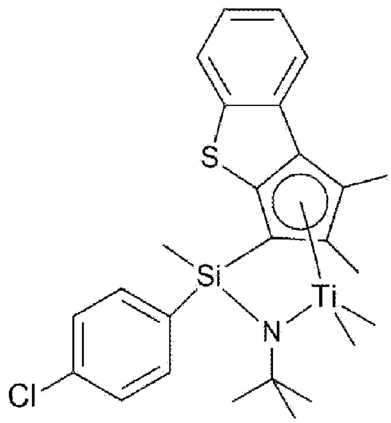

[Formula 2-8]

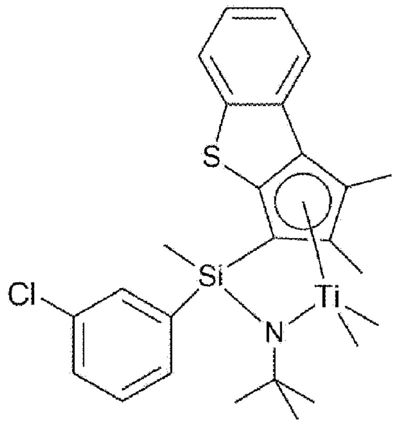

[Formula 2-9]

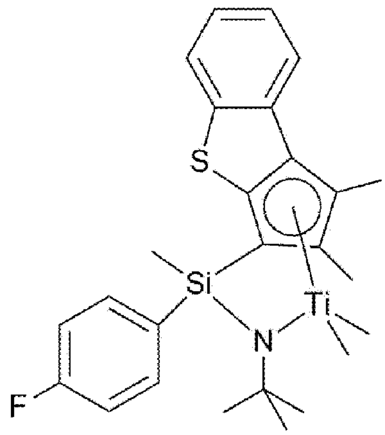

[Formula 2-10]

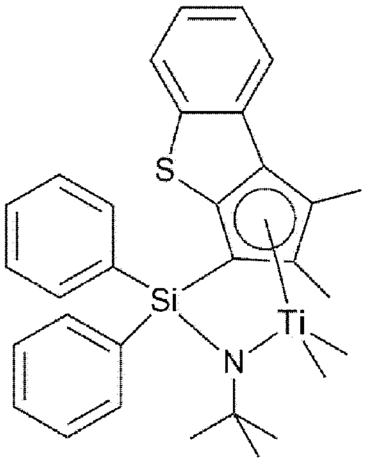

In the present invention, an alpha-olefin-based monomer that is a comonomer, may be an olefin-based monomer of 4 to 20 carbon atoms. Particular examples may include propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, etc., and any one among them or mixtures of two or more thereof may be used.

Among them, the alpha-olefin monomer may be 1-butene, 1-hexene or 1-octene, most preferably, 1-butene.

In the present invention, the alpha-olefin-based monomer content may be suitably selected in the range satisfying the above-described physical conditions, particularly, in greater than 0 to 99 mol%, or 10 to 50 mol%.

**<Composition for encapsulant film>**

In addition, the present invention provides a composition for an encapsulant film, including the ethylene/alpha-olefin copolymer. By using the composition for an encapsulant film, a modified resin composition, for example, a silane modified resin composition or an amino silane modified resin composition may be prepared.

Particularly, the composition for an encapsulant film may include a known crosslinking agent, a crosslinking auxiliary agent, a silane coupling agent, etc., in addition to the ethylene/alpha-olefin copolymer.

The crosslinking agent is a radical initiator in the preparation step of the silane modified resin composition, and may play the role of initiating graft reaction of an unsaturated silane composition onto a resin composition. In addition, by forming a crosslinking bond in the silane modified resin composition, or between the silane modified resin composition and an unmodified resin composition during a lamination step for manufacturing an optoelectronic device, the heat resistant durability of a final product, for example, an encapsulant sheet may be improved.

The crosslinking agent may use various crosslinking agents well-known in this technical field only if it is a crosslinking compound capable of initiating the radical polymerization of a vinyl group or forming a crosslinking bond, for example, one or two or more selected from the group consisting of organic peroxides, hydroxyl peroxides and azo compounds.

Particularly, one or more selected from the group consisting of dialkyl peroxides such as t-butylcumylperoxide, di-t-butyl peroxide, di-cumyl peroxide, 2,5-dimethyl-2,5-di(t-butylperoxy)hexane, and 2,5-dimethyl-2,5-di(t-butylperoxy)-3-hexyne; hydroperoxides such as cumene hydroperoxide, diisopropyl benzene hydroperoxide, 2,5-dimethyl-2,5-di(hydroperoxy)hexane, and t-butyl hydroperoxide; diacyl peroxides such as bis-3,5,5-trimethylhexanoyl peroxide, octanoyl peroxide, benzoyl peroxide, o-methylbenzoyl peroxide, and 2,4-dichlorobenzoyl peroxide; peroxy esters such as t-butylperoxy isobutyrate, t-butylperoxy acetate, t-butylperoxy-2-ethylhexylcarbonate (TBEC), t-butylperoxy-2-ethylhexanoate, t-butylperoxy pyvalate, t-butylperoxy octoate, t-butylperoxyisopropyl carbonate, t-butylperoxybenzoate, di-t-butylperoxyphthalate, 2,5-dimethyl-2,5-di(benzoylperoxy)hexane, and 2,5-dimethyl-2,5-di(benzoylperoxy)-3-hexyne; ketone peroxides such as methyl ethyl ketone peroxide and cyclohexanone peroxide, lauryl peroxide, and azo compounds such as azobisisobutyronitrile and azobis(2,4-dimethylvaleronitrile), may be used, without limitation.

The organic peroxide may be an organic peroxide having a one-hour half-life temperature of 120 to 135°C, for example, 120 to 130°C, 120 to 125°C, preferably, 121°C. The "one-hour half-life temperature" means a temperature at which the half-life of the crosslinking agent becomes one hour. According to the one-hour half-life temperature, the temperature at which radical initiation reaction is efficiently performed may become different. Therefore, in case of using the organic peroxide having the one-hour half-life temperature in the above-described range, radical initiation reaction,

that is, crosslinking reaction in a lamination process temperature for manufacturing an optoelectronic device may be effectively performed.

The crosslinking agent may be included in 0.01 to 1 part by weight, for example, 0.05 to 0.55, 0.1 to 0.5 or 0.15 to 0.45 parts by weight based on 100 parts by weight of the composition for an encapsulant film. If the crosslinking agent is included in less than 0.01 parts by weight, heat resistant properties may be insignificant, and if the amount is greater than 1 part by weight, the moldability of an encapsulant sheet is deteriorated, problems generating process limitation may arise, and physical properties of an encapsulant may be influenced.

In addition, the resin composition may include a crosslinking auxiliary agent in addition to the crosslinking agent. By including the crosslinking auxiliary agent in the resin composition, the degree of crosslinking in the resin composition by the crosslinking auxiliary agent may be increased, and accordingly, the heat resistant durability of a final product, for example, an encapsulant sheet may be improved even further.

The crosslinking auxiliary agent may use various crosslinking auxiliary agents well-known in this technical field. For example, as the crosslinking auxiliary agent, a compound containing at least one or more unsaturated groups such as an allyl group and a (meth)acryloxy group may be used.

The compound containing the allyl group may include, for example, a polyallyl compound such as triallyl isocyanurate (TAIC), triallyl cyanurate, diallyl phthalate, diallyl fumarate and diallyl maleate, and the compound containing the (meth)acryloxy group may include a poly(meth)acryloxy compound such as ethylene glycol diacrylate, ethylene glycol dimethacrylate, and trimethylolpropane trimethacryate, without limitation.

The crosslinking auxiliary agent may be included in an amount of 0.01 to 0.5 parts by weight, for example, 0.01 to 0.3, 0.015 to 0.2, or 0.016 to 0.16 parts by weight based on 100 parts by weight of the composition for an encapsulant film. If the crosslinking auxiliary agent is included in less than 0.01 parts by weight, the improving effects of heat resistant properties may be insignificant, and if the amount is greater than 0.5 parts by weight, problems of affecting the physical properties of a final product, for example, an encapsulant sheet may be generated, and the production cost may increase.

In addition, the composition for an encapsulant film may additionally include a silane coupling agent in addition to the ethylene/alpha-olefin copolymer, the crosslinking agent and the crosslinking auxiliary agent.

The silane coupling agent may use, for example, one or more selected from the group consisting of N-(β-aminoethyl)-γ-aminopropyltrimethoxysilane, N-(β-aminoethyl)-γ-aminopropylmethyldimethoxysilane, γ-aminopropyltriethoxysilane, γ-glycidoxypropyltrimethoxysilane, and γ-methacryloxypropyltrimethoxysilane (MEMO).

The silane coupling agent may be included in 0.1 to 0.4 parts by weight based on 100 parts by weight of the composition for an encapsulant film. If the amount used is less than 0.3, adhesiveness with glass during manufacturing a solar cell module may become poor, and water penetration may become easy, and thus, the long-term performance of the module may not be secured. If the amount is more than 1 part by weight, it acts as an increasing factor of Y.I, undesirably.

In addition, the composition of an encapsulant film may additionally include an unsaturated silane compound and an amino silane compound.

The unsaturated silane compound may be grafted into a main chain including the polymerization unit of the monomer of the copolymer of the present invention in the presence of a radical initiator, etc., and included in a polymerized type in a silane modified resin composition or an amino silane modified resin composition.

The unsaturated silane compound may be vinyltrimethoxy silane, vinyltriethoxy silane, vinyltripropoxy silane, vinyltriisopropoxy silane, vinyltributoxy silane, vinyltripentoxy silane, vinyltriphenoxy silane, or vinyltriacetoxy silane, and in an embodiment, vinyltrimethoxy silane or vinyltriethoxy silane may be used among them, without limitation.

In addition, the amino silane compound may act as a catalyst for promoting hydrolysis reaction for converting an unsaturated silane compound grafted in the main chain of the copolymer, for example, a reactive functional group such as the alkoxy group of vinyltriethoxy silane into a hydroxyl group in the grafting modification step of the ethylene/alpha-olefin copolymer, to improve the adhesive strength of upper and lower glass substrates or with a back sheet composed of a fluorine resin, etc. At the same time, the amino silane compound may be directly involved as a reactant in copolymerization reaction and may provide an amino modified resin composition with a moiety having an amine functional group.

The amino silane compound is a silane compound including an amine group and is not specifically limited as long as it is a primary amine or a secondary amine. For example, the amino silane compound may use aminotrialkoxysilane, aminodialkoxysilane, etc., and examples may include one or more selected from the group consisting of 3-aminopropyltrimethoxysilane (APTMS), 3-aminopropyltriethoxysilane (APTES), bis[(3-triethoxysilyl)propyl]amine, bis[(3-trimethoxysilyl)propyl]amine, 3-aminopropylmethyldiethoxysilane, 3-aminopropylmethyldimethoxysilane, N-[3-(trimethoxysilyl)propyl]ethylenediamine (DAS), aminoethylaminopropyltriethoxysilane, aminoethylaminopropylmethyldimethoxysilane, aminoethylaminopropylmethyldiethoxysilane, aminoethylaminomethyltriethoxysilane, aminoethylaminomethylmethyldiethoxysilane, diethylenetriaminopropyltrimethoxysilane, diethylenetriaminopropyltriethoxysilane, diethylenetriaminopropylmethyldimethoxysilane, diethyleneaminomethylmethyldiethoxysilane, (N-phenylamino)methyltrimethoxysilane, (N-phenylamino)methyltriethoxysilane, (N-phenylamino)methylmethyldimethoxysilane, (N-phenylamino)methylmethyldiethoxysilane, 3-(N-phenylamino)propyltrimethoxysilane, 3-(N-phenylamino)propyltriethoxysilane,

3-(N-phenylamino)propylmethyldimethoxysilane, 3-(N-phenylamino)propylmethyldiethoxysilane, and N-(N-butyl)-3-aminopropyltrimethoxysilane. The amino silane compound may be used alone or as a mixture type.

The amounts of the unsaturated silane compound and/or the amino silane compound are not specifically limited.

In addition, the composition for an encapsulant film may additionally include one or more additives selected from a light stabilizer, a UV absorbent and a thermal stabilizer as necessary.

The light stabilizer may capture the active species of the photothermal initiation of a resin to prevent photooxidation according to the use applied of the composition. The type of the light stabilizer used is not specifically limited, and for example, known compounds such as a hindered amine-based compound and a hindered piperidine-based compound may be used.

The UV absorbent absorbs ultraviolet rays from the sunlight, etc. and transforms into harmless thermal energy in a molecule, and may play the role of preventing the excitation of the active species of photothermal initiation in the resin composition. Particular types of the UV absorbent used are not specifically limited, and for example, one or a mixture of two or more of benzophenone-based, benzotriazole-based, acrylnitrile-based, metal complex-based, hindered amine-based, inorganic including ultrafine particulate titanium oxide and ultrafine particulate zinc oxide UV absorbents, etc. may be used.

In addition, the thermal stabilizer may include a phosphor-based thermal stabilizer such as tris(2,4-di-tert-butylphenyl)phosphite, phosphorous acid, bis[2,4-bis(1,1-dimethylethyl)-6-methylphenyl]ethylester, tetrakis(2,4-di-tert-butylphenyl)[1,1-biphenyl]-4,4'-diylbisphosphonate and bis(2,4-di-tert-butylphenyl)pentaerythritol diphosphite; and a lactone-based thermal stabilizer such as the reaction product of 8-hydroxy-5,7-di-tert-butyl-furan-2-on and o-xylene, and one or two or more of them may be used.

The amounts of the light stabilizer, UV absorbent and/or thermal stabilizer are not specifically limited. That is, the amounts of the additives may be suitably selected considering the use of the resin composition, the shape or density of the additives, etc. Generally, the amounts may be suitably controlled in a range of 0.01 to 5 parts by weight based on 100 parts by weight of the total solid content of the composition for an encapsulant film.

In addition, the composition for an encapsulant film of the present invention may additionally include various additives well-known in this art according to the use of the resin component applied in addition to the above components.

In addition, the composition for an encapsulant film may be utilized in various molded articles by molding by injection, extrusion, etc. Particularly, the composition may be used in various optoelectronic devices, for example, as an encapsulant for the encapsulation of a device in a solar cell, and may be used as an industrial material applied in a lamination process with heating, etc., without limitation.

## Examples

Hereinafter, the present invention will be explained in more detail referring to embodiments. However, the embodiments are provided only for illustration, and the scope of the present invention is not limited thereto.

### Preparation Example 1

(1) Preparation of ligand compound

<Synthesis of N-tert-butyl-1-(1,2-dimethyl-3H-benzo[b]cyclopenta[d]thiophen-3-yl)-1,1-dimethylsilanamine>

To a 100 ml schlenk flask, 4.65 g (15.88 mmol) of a compound of Formula 3 was weighed and added, and 80 ml of THF was injected thereto. At room temperature, $tBuNH_2$ (4 eq, 6.68 ml) was injected thereto and reacted at room temperature for 3 days. After finishing the reaction, THF was removed, and the resultant reaction product was filtered using hexane. After drying solvents, 4.50 g (86%) of a yellow liquid was obtained.

$^1$H-NMR (in $CDCl_3$, 500 MHz): 7.99 (d, 1H), 7.83 (d, 1H), 7.35 (dd, 1H), 7.24 (dd, 1H), 3.49 (s, 1H), 2.37 (s, 3H), 2.17 (s, 3H), 1.27 (s, 9H), 0.19 (s, 3H), -0.17 (s, 3H).

(2) Preparation of transition metal compound

[Formula 1-1]

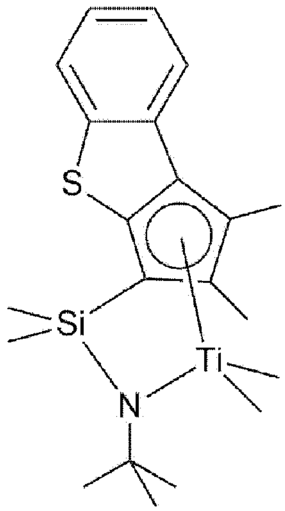

To a 50 ml schlenk flask, the ligand compound (1.06 g, 3.22 mmol/1.0 eq) and 16.0 ml (0.2 M) of MTBE were put and stirred first. n-BuLi (2.64 ml, 6.60 mmol/2.05 eq, 2.5 M in THF) was added thereto at -40°C and reacted at room temperature overnight. After that, MeMgBr (2.68 ml, 8.05 mmol/2.5 eq, 3.0 M in diethyl ether) was slowly added thereto dropwisely at - 40°C, and $TiCl_4$ (2.68 ml, 3.22 mmol/1.0 eq, 1.0 M in toluene) was put in order, followed by reacting at room temperature overnight. After that, the reaction mixture was passed through celite using hexane for filtration. After drying the solvents, 1.07 g (82%) of a brown solid was obtained.

$^1H$-NMR (in $CDCl_3$, 500 MHz): 7.99 (d, 1H), 7.68 (d, 1H), 7.40 (dd, 1H), 7.30 (dd, 1H), 3.22 (s, 1H), 2.67 (s, 3H), 2.05 (s, 3H), 1.54 (s, 9H), 0.58 (s, 3H), 0.57 (s, 3H), 0.40 (s, 3H), -0.45 (s, 3H).

**Preparation Example 2**

(1) Preparation of ligand compound

<Synthesis of N-tert-butyl-1-(1,2-dimetyl-3H-benzo[b]cyclopenta[d]thiophene-3-yl)-1, 1-(methyl)(phenyl)silaneamine>

(i) Preparation of chloro-1-(1,2-dimethyl-3H-benzo[b]cyclopenta[d]thiophene-3-yl)-1, 1-(methyl)(phenyl)silane

To a 250 ml schlenk flask, 10 g (1.0 eq, 49.925 mmol) of 1,2-dimethyl-3H-benzo[b]cyclopenta[d]thiophene and 100 ml of THF were put, and 22 ml (1.1 eq, 54.918 mmol, 2.5 M in hexane) of n-BuLi was added thereto dropwisely at -30°C, followed by stirring at room temperature for 3 hours. A stirred Li-complex THF solution was cannulated into a schlenk flask containing 8.1 ml (1.0 eq, 49.925 mmol) of dichloro (methyl) (phenyl)silane and 70 ml of THF at -78°C, followed by stirring at room temperature overnight. After stirring, drying in vacuum was carried out, and extraction with 100 ml of hexane was carried out.

(ii) Preparation of N-tert-butyl-1-(1,2-dimethyl-3H-benzo[b]cyclopenta[d]thiophene-3-yl)-1, 1-(methyl)(phenyl)silaneamine

After injecting 42 ml (8 eq, 399.4 mmol) of $t-BuNH_2$ to 100 ml of the extracted chloro-1-(1,2-dimethyl-3H-benzo[b]cyclopenta[d]thiophene-3-yl)-1, 1-(methyl)(phenyl)silane hexane solution at room temperature, stirring was performed at room temperature overnight. After stirring, drying in vacuum was carried out, and extraction with 150 ml of hexane was carried out. After drying the solvents, 13.36 g (68%, dr = 1: 1) of a yellow solid was obtained.

$^1H$ NMR($CDCl_3$, 500 MHz): δ 7.93(t, 2H), 7.79(d,1H), 7.71(d,1H), 7.60(d, 2H), 7.48(d, 2H), 7.40~7.10(m, 10H, aromatic), 3.62(s, 1H), 3.60(s, 1H), 2.28(s, 6H), 2.09(s, 3H), 1.76(s, 3H), 1.12(s, 18H), 0.23(s, 3H), 0.13(s, 3H).

(2)Preparation of transition metal compound

[Formula 2-4]

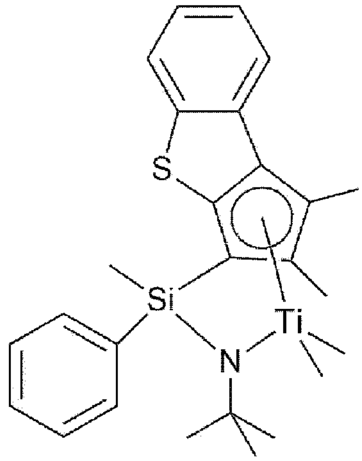

To a 100 ml schlenk flask, 4.93 g (12.575 mmol, 1.0 eq) of the ligand compound of Formula 2-4 and 50 ml (0.2 M) of toluene were put, and 10.3 ml (25.779 mmol, 2.05 eq, 2.5M in hexane) of n-BuLi was added thereto dropwisely at -30°C, followed by stirring at room temperature overnight. After stirring, 12.6 ml (37.725 mmol, 3.0 eq, 3.0 M in diethyl ether) of MeMgBr was added thereto dropwisely, and 13.2 ml (13.204 mmol, 1.05 eq, 1.0 M in toluene) of $TiCl_4$ was put in order, followed by stirring at room temperature overnight. After stirring, the reaction product was dried in vacuum and extracted with 150 ml of hexane. The solvents were removed to 50 ml, and 4 ml (37.725 mmol, 3.0 eq) of DME was added dropwisely and stirred at room temperature overnight. After drying again in vacuum and extracting with 150 ml of hexane, 2.23 g (38%, dr = 1: 0.5) of a brown solid was obtained.

$^1H$ NMR($CDCl_3$, 500 MHz): $\delta$ 7.98 (d, 1H), 7.94 (d, 1H), 7.71(t, 6H), 7.50~7.30(10H), 2.66(s, 3H), 2.61(s, 3H), 2.15(s, 3H), 1.62(s, 9H), 1.56(s, 9H), 1.53(s, 3H), 0.93(s, 3H), 0.31(s, 3H), 0.58(s, 3H), 0.51(s, 3H), -0.26(s, 3H), -0.39(s, 3H).

**Example 1**

While injecting a hexane solvent in 7.0 kg/h and 1-butene in 1.09 kg/h, a 1.5 L continuous process reactor was pre-heated to 135°C. A triisobutylaluminum compound (0.045 mmol/min), a mixture (0.150 μmol/min) of the transition metal compounds obtained in Preparation Examples 1 and 2 in a mole ratio of 3: 7, and a dimethylanilinium tetrakis(pentafluorophenyl)borate cocatalyst (0.30 μmol/min) were put in the reactor at the same time. Then, into the reactor, ethylene (0.87 kg/h) and a hydrogen gas (20 cc/min) were injected and copolymerization reaction was continuously carried out while maintaining a pressure of 89 bar and 135°C for 60 minutes or more to prepare a copolymer. After drying for 12 hours or more in a vacuum oven, physical properties were measured.

**Examples 2 to 4, and Comparative Examples 1 to 5**

Ethylene/alpha-olefin copolymers were prepared by the same method as in Example 1 except for changing polymerization conditions as in Table 1 below.

[Table 1]

| | Cat. | Cocat. | Tibal | C2 | 1-C4 | C6 | Hydro gen | Temper ature |
|---|---|---|---|---|---|---|---|---|
| | μmol/m in | μmol/m in | kg/h | kg/h | kg/h | cc/m in | cc/mi n | °C |
| Example 1 | 0.150 | 0.30 | 0.045 | 0.87 | 1.09 | 7.0 | 20 | 135 |
| Example 2 | 0.145 | 0.29 | 0.050 | 0.87 | 1.02 | 7.0 | 18 | 135 |
| Example 3 | 0.150 | 0.30 | 0.050 | 0.87 | 1.05 | 7.0 | 18 | 135 |
| Example 4 | 0.150 | 0.30 | 0.045 | 0.87 | 1.00 | 7.0 | 11 | 134 |
| Comparative Example 1 | 0.150 | 0.30 | 0.050 | 0.87 | 0.85 | 7.0 | 16 | 136 |

(continued)

| | Cat. | Cocat. | Tibal | C2 | 1-C4 | C6 | Hydro gen | Temper ature |
|---|---|---|---|---|---|---|---|---|
| | μmol/m in | μmol/m in | kg/h | kg/h | kg/h | cc/m in | cc/mi n | °C |
| Comparative Example 2 | 0.150 | 0.30 | 0.050 | 0.87 | 0.90 | 7.0 | 17 | 135 |
| Comparative Example 3 | 0.150 | 0.30 | 0.050 | 0.87 | 0.97 | 7.0 | 18 | 134 |
| Comparative Example 4 | 0.145 | 0.29 | 0.045 | 0.87 | 0.95 | 7.0 | 10 | 135 |
| Comparative Example 5 | 0.150 | 0.0 | 0.055 | 0.87 | 0.97 | 7.0 | 8 | 138 |

**Experimental Example 1**

With respect to the ethylene/alpha-olefin copolymers prepared in the Examples and Comparative Examples, physical properties were measured according to the methods below.

(1) Density ($g/cm^3$)

Measurement was conducted according to ASTM D-792.

(2) Melt index ($MI_{2.16}$, dg/min)

Measurement was conducted according to ASTM D-1238 (condition E, 190°C, 2.16 kg load).

(3) Melt flow rate ratio (MFRR, $MI_{10}/MI_{2.16}$)

$MI_{10}$ (condition E, 190°C, 10 kg load) and $MI_{2.16}$ (condition E, 190°C, 2.16 kg load) were measured according to ASTM D-1238 and $MI_{10}/MI_{2.16}$ was calculated.

(4) Melting temperature (Tm)

Melting temperature (Tm) could be obtained using differential scanning calorimeter (DSC 6000) manufactured by PerkinElmer Co., and particularly, under a nitrogen atmosphere using DSC, the temperature of a copolymer was elevated to 150°C, maintained for 1 minute, decreased to -100°C, and elevated again to 150°C, and a DSC curve was observed. In this case, the temperature elevating rate and decreasing rate were 10°C/min, respectively.

(5) d-spacing

The ethylene/alpha-olefin copolymer was put in a 1 T square frame, and a front side and a rear side were covered with 3 T steel plates, and then, this was injected in a high-temperature press machine. After treating at 190°C and 25 $N/cm^2$ for 240 seconds, depressurization/pressurization degassing six times, and treating at 190°C and 151 $N/cm^2$ for 240 seconds, the temperature was decreased by 15°C per minute to cool to 30°C. In this case, the pressure was maintained to 151 $N/cm^2$. The resultant was maintained at 30°C and 151 $N/cm^2$ for 300 seconds to complete the manufacture of a specimen.

With respect to 1 cm x 1 cm (width x length) of the specimen with a thickness of 1 mm thus manufactured, the specimen was placed at a position separated from about 2.5 m from a detector, and X-ray was irradiated using a model name of Xeuss 2.0 X-ray scattering equipment of Xenocs Co. for measurement. Pilatus3 300K (2D detector) was used as the detector, and a 2D diffraction pattern scattered out was obtained as an image and calibrated using a sample-to-detector distance obtained through a standard specimen. After that, scattering strength (I(q)) in accordance with scattering vector (q) was converted by circular averaging.

[General Formula 1]

$$q = 4\pi \sin\theta / \lambda$$

In General Formula 1,

q is scattering vector, $\theta$ is a 1/2 value of a scattering angle, and $\lambda$ is the wavelength of irradiated X-ray.

The d-spacing between crystal domains was analyzed by measuring the scattering strength (I(q)) in accordance with scattering vector (q) obtained through SAXS. By crossing the scattering strength (I(q)) with the square of the scattering vector (q), peaks are observed on a graph of I(q) x $q^2$ in accordance with scattering vector (q). In this case, by using the scattering vector value (q*) of the observed peak, a d-spacing between crystal domains was obtained.

[General Formula 2]

$$\text{d-spacing} = 2\pi/q^*$$

In General Formula 2,
q* represents a scattering vector value in a peak on the graph of I(q) x $q^2$ in accordance with scattering vector (q).

(6) Degree of crystallinity

With respect to 1 cm x 1 cm (width x length) of the specimen with a thickness of 1 mm thus formed, scattering strength (I(q)) in accordance with scattering vector (q) was measured by transmitting X-ray to the specimen using a model name of Xeuss 2.0 X-ray scattering equipment of Xenocs Co. The specimen was placed at a position separated by about 0.7 m from a detector, and X-ray was irradiated for measurement. Pilatus3 300K (2D detector) was used as the detector. The WAXS is a parallel beam method with the principle of the measurement of the diffraction of X-ray generated by the collision with the specimen during transmission, and the degree of crystallinity is obtained by assigning peaks derived from a crystal structure and calculating how much the region of crystal peaks occupies in contrast to a total region.

Particularly, the scattering or diffraction strength (I(q)) in accordance with scattering vector (q) obtained through WAXS was measured and analyzed. From the scattering or diffraction strength obtained, deconvolution on diffraction peaks by amorphous halo (Ia(q)), mesophase (Im(q)) and crystal (Ic(q)) was conducted. Particularly, the deconvolution of the diffraction peaks was defined by the combination of Gaussian and Lorentzian functions and a method below.

1) The amorphous halo (① in FIG. 1) is defined as the sum of three Gaussian functions ((2) in FIG. 1). Three Gaussian functions have peak centers at the scattering vectors of 0.943 $Å^{-1}$, 1.369 $Å^{-1}$, and 1.812 $Å^{-1}$, respectively.
2) One diffraction peak (Im(q)) by the mesophase is defined by a Lorentzian function. The peak center is at the scattering vector of 1.373 $Å^{-1}$ ((3) in FIG. 1).
3) The sum of two diffraction peaks by the crystal is defined by the combination of Gaussian (G) and Lorentzian (L) functions in a ratio of 1: 1 (0.5 × G + 0.5 × L). Peak centers are at the scattering vectors of 1.486 $Å^{-1}$, and 1.647 $Å^{-1}$ ((4) in FIG. 1).

Through the results, the degree of crystallinity was calculated according to [General Formula 3].

[General Formula 3]

$$\text{Degree of crystallinity} = \frac{\int (I_m + I_c) q^2 \, dq}{\int (I_a + I_m + I_c) q^2 \, dq}$$

In General Formula 3,

$I_m$ is a mesophase peak,
$I_c$ is a crystal peak, and
$I_a$ is an amorphous halo peak.

(7) Hardness (shore A)

The ethylene/alpha-olefin copolymer was put in a 3 T square frame, and a front side and a rear side were

covered with 3 T steel plates, and then, this was injected in a high-temperature press machine. After treating at 190°C and 25 N/$cm^2$ for 240 seconds, depressurization/pressurization degassing six times, and treating at 190°C and 151 N/$cm^2$ for 240 seconds continuously, the temperature was decreased by 15°C per minute to cool to 30°C. In this case, the pressure was maintained to 151 N/$cm^2$. The resultant was maintained at 30°C and 151 N/$cm^2$ for 300 seconds to complete the manufacture of a specimen.

The specimen manufactured was aged in a constant temperature of 40°C and constant humidity chamber for 24 hours or more, and Shore A hardness was measured based on ASTM D2240 using a portable hardness measuring instrument. In this case, if the specimen is taken out of an oven, the sample temperature may be changed, and the measurement was performed in the chamber of 40°C for accurate measurement.

[Table 2]

| | Densit y (g/cc) | MI (dg/ min) | MFRR | Tm (°C) | d-spacing (nm) | Degree of crystalli nity (%) | Hardne ss (shore A) |
|---|---|---|---|---|---|---|---|
| Example 1 | 0.8716 | 16.1 | 6.8 | 57.5 | 12.3 | 9.4 | 62.2 |
| Example 2 | 0.8738 | 14.9 | 6.9 | 60.6 | 12.1 | 9.6 | 64.7 |
| Example 3 | 0.8731 | 14.7 | 6.9 | 59.3 | 12.2 | 9.8 | 63.9 |
| Example 4 | 0.8740 | 5.0 | 7.3 | 58.8 | 12.1 | 12.0 | 64.9 |
| Comparative Example 1 | 0.8770 | 12.9 | 6.8 | 65.1 | 11.5 | 15.1 | 68.4 |
| Comparative Example 2 | 0.8759 | 13.2 | 6.9 | 63.5 | 11.6 | 13.4 | 67.2 |
| Comparative Example 3 | 0.8745 | 14.4 | 6.8 | 61.4 | 12.0 | 12.7 | 65.5 |
| Comparative Example 4 | 0.8750 | 4.9 | 6.9 | 61.0 | 11.9 | 12.5 | 66.1 |
| Comparative Example 5 | 0.8755 | 5.4 | 7.4 | 61.8 | 11.6 | 14.2 | 64.9 |

As in Table 2, the ethylene/alpha-olefin copolymer according to the present invention has the d-spacing of 12 nm or more, the degree of crystallinity of 14% , the shore A hardness of 65 or less, and the melting temperature of 70°C or less.

**Experimental Example 2**

(1) Immersion completion time

For the immersion of a crosslinking agent, a planetary mixer of Thermo Electron (Karlsruhe) GmbH was used. To 500 g of an ethylene/alpha-olefin copolymer, 1 part per hundred rubber (phr) of t-butyl 1-(2-ethylhexyl)monoperoxycarbonate (TBEC), 0.5 phr of tetrakis(vinyldimethylsiloxy)silane (TVSS), and 0.2 phr of methacryloxypropyltrimethoxysilane (MEMO) were injected. While stirring in 40 rpm, the change of a torque value in accordance with time was observed, and immersion was terminated when the torque value increased rapidly. Before being absorbed in the ethylene/alpha-olefin copolymer, the crosslinking agent played the role of a lubricant, and a low torque value was maintained, but when total crosslinking agent was absorbed, the torque value increased. Accordingly, a point where the torque value increased rapidly was defined as an immersion completion time.

(2) Degree of crosslinking

After immersing a crosslinking agent, an encapsulant film having an average thickness of 550 μm was formed at a low temperature (under conditions of 100°C or less of an extruder barrel temperature) at which high-temperature crosslinking was not achieved, using a microextruder.

The evaluation of the degree of crosslinking was performed based on China Photovoltaic Industry Association (CPIA) standard and ASTM D2765. The encapsulant film thus formed was cut into a size of 10 cm × 10 cm, and vacuum

laminated at 150°C for 20 minutes (maintain vacuum for 5 minutes/pressurization for 1 minute/depressurization for 14 minutes) to obtain a crosslinked specimen.

The crosslinked specimen was cut into a suitable size, weighed by 0.5 g on a 200 mesh wire cage, and dissolved for 5 hours under xylene refluxing. After that, the specimen was dried in a vacuum oven, and the weights before and after refluxing were compared to measure the degree of crosslinking of each specimen.

[Table 3]

| | Immersion completion time (min) | Degree of crosslinking (%) |
|---|---|---|
| Example 1 | 35 | 78.1 |
| Example 2 | 37 | 79.2 |
| Example 3 | 35 | 79.4 |
| Example 4 | 38 | 87.5 |
| Comparative Example 1 | 58 | 79.8 |
| Comparative Example 2 | 48 | 78.9 |
| Comparative Example 3 | 45 | 78.5 |
| Comparative Example 4 | 43 | 87.0 |
| Comparative Example 5 | 42 | 86.5 |

As shown in the table, if the ethylene/alpha-olefin copolymers of the Examples according to the present invention are used, the immersion completion time of a crosslinking agent is reduced, and it could be found that crosslinking could be completed in a short time, and the same or better degree of crosslinking is shown when compared to the Comparative Examples.

## Claims

**1.** An ethylene/alpha-olefin copolymer satisfying the following conditions (a) to (d):

(a) a d-spacing measured by small-angle X-ray scattering (SAXS): 12 nm or more;
(b) a crystallinity measured by wide-angle X-ray scattering (WAXS): 14% or less;
(c) a hardness (shore A) measured in conditions of 40°C: 65 or less; and
(d) a melting temperature measured by differential scanning calorimetry (DSC): 70°C or less.

**2.** The ethylene/alpha-olefin copolymer according to claim 1, wherein the crystallinity is 13% or less.

**3.** The ethylene/alpha-olefin copolymer according to claim 1, wherein the hardness (shore A) is 63 or less.

**4.** The ethylene/alpha-olefin copolymer according to claim 1, wherein the melting temperature is 50 to 65°C.

**5.** The ethylene/alpha-olefin copolymer according to claim 1, wherein a density is 0.85 to 0.89 g/cc.

**6.** The ethylene/alpha-olefin copolymer according to claim 1, wherein a melt index (MI, 190°C, 2.16 kg load conditions) is 1 to 100 dg/min.

**7.** The ethylene/alpha-olefin copolymer according to claim 1, wherein a melt flow rate ratio (MFRR, $MI_{10}/MI_{2.16}$) which is a value of a melt index ($MI_{10}$, 190°C, 10 kg load conditions) with respect to a melt index ($MI_{2.16}$, 190°C, 2.16 kg load conditions) is 8.0 or less.

**8.** The ethylene/alpha-olefin copolymer according to claim 1, wherein the alpha-olefin comprises one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene and 1-eicosene.

**9.** The ethylene/alpha-olefin copolymer according to claim 1, wherein the alpha-olefin is comprised in greater than 0

to 99 mol% based on the ethylene/alpha olefin copolymer.

**10.** A composition for an encapsulant film, comprising the ethylene/alpha-olefin copolymer according to any one of claims 1 to 9.

FIG. 1

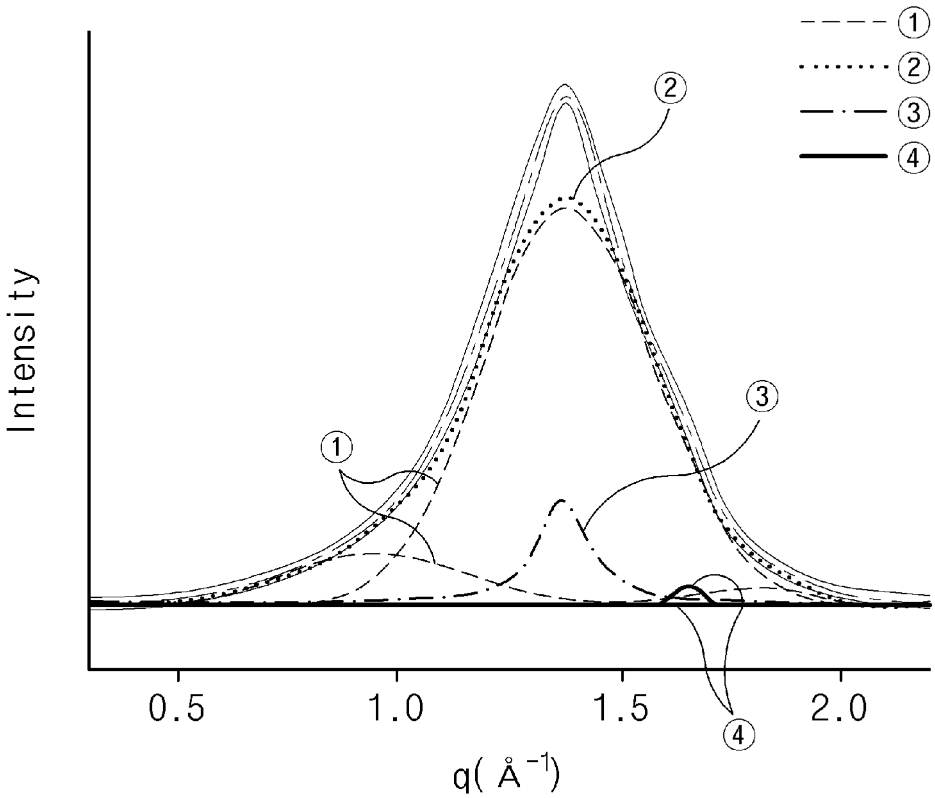

## INTERNATIONAL SEARCH REPORT

International application No.
**PCT/KR2022/016694**

**A. CLASSIFICATION OF SUBJECT MATTER**

**C08F 210/16**(2006.01)i; **C08F 210/14**(2006.01)i; **C08L 23/08**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 210/18(2006.01); C08L 23/08(2006.01); H01L 31/042(2006.01); H01L 31/048(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 에틸렌/알파-올레핀 공중합체(ethylene/alpha-olefin copolymer), 결정간격(d-spacing), 결정화도(crystallinity), 경도(hardness), 용융온도(melting temperature, Tm)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0128319 A (LG CHEM, LTD.) 26 October 2021 (2021-10-26) See claims 1-9; and paragraphs [0045], [0047], [0194], [0195], [0201]-[0210], [0212]-[0224], [0226]-[0239], [0241]-[0253] and [0259]-[0264]. | 1-10 |
| A | JP 2012-126909 A (MITSUI CHEMICALS TOHCELLO INC.) 05 July 2012 (2012-07-05) See claims 1-8. | 1-10 |
| A | WO 2012-070245 A1 (MITSUI CHEMICALS, INC.) 31 May 2012 (2012-05-31) See claims 1-24. | 1-10 |
| A | KR 10-2021-0128320 A (LG CHEM, LTD.) 26 October 2021 (2021-10-26) See claims 1-12. | 1-10 |
| A | KR 10-2021-0128325 A (LG CHEM, LTD.) 26 October 2021 (2021-10-26) See claims 1-8. | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2023** | **08 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/016694**

| Patent document cited in search report | Publication date (day/month/year) | Patent family member(s) | Publication date (day/month/year) |
|---|---|---|---|
| KR 10-2021-0128319 A | 26 October 2021 | CN 112592422 A | 02 April 2021 |
| | | CN 112592422 B | 29 April 2022 |
| | | EP 4047026 A1 | 24 August 2022 |
| | | KR 10-2348518 B1 | 10 January 2022 |
| | | WO 2021-210748 A1 | 21 October 2021 |
| JP 2012-126909 A | 05 July 2012 | CN 101087842 A | 12 December 2007 |
| | | CN 101087842 B | 30 May 2012 |
| | | CN 102061024 A | 18 May 2011 |
| | | CN 102061024 B | 20 August 2014 |
| | | EP 1837372 A1 | 26 September 2007 |
| | | EP 1837372 B1 | 06 October 2010 |
| | | JP 2006-210905 A | 10 August 2006 |
| | | JP 2006-210906 A | 10 August 2006 |
| | | JP 5268227 B2 | 21 August 2013 |
| | | JP 5366109 B2 | 11 December 2013 |
| | | JP 5484494 B2 | 07 May 2014 |
| | | KR 10-0896302 B1 | 07 May 2009 |
| | | KR 10-0896305 B1 | 07 May 2009 |
| | | KR 10-2007-0086626 A | 27 August 2007 |
| | | KR 10-2008-0068944 A | 24 July 2008 |
| | | TW 200635060 A | 01 October 2006 |
| | | TW I397187 B | 21 May 2013 |
| | | US 2007-0267059 A1 | 22 November 2007 |
| | | US 2010-0313956 A1 | 16 December 2010 |
| | | US 2013-0125986 A1 | 23 May 2013 |
| | | US 8426544 B2 | 23 April 2013 |
| | | US 8569437 B2 | 29 October 2013 |
| | | WO 2006-070793 A1 | 06 July 2006 |
| WO 2012-070245 A1 | 31 May 2012 | JP 5871815 B2 | 01 March 2016 |
| | | WO 2012-070245 A1 | 19 May 2014 |
| KR 10-2021-0128320 A | 26 October 2021 | CN 112625162 A | 09 April 2021 |
| | | EP 4047051 A1 | 24 August 2022 |
| | | KR 10-2387101 B1 | 18 April 2022 |
| | | WO 2021-210749 A1 | 21 October 2021 |
| KR 10-2021-0128325 A | 26 October 2021 | CN 112646070 A | 13 April 2021 |
| | | EP 3988588 A1 | 27 April 2022 |
| | | JP 2022-545511 A | 27 October 2022 |
| | | KR 10-2348519 B1 | 10 January 2022 |
| | | US 2022-0251355 A1 | 11 August 2022 |
| | | WO 2021-210755 A1 | 21 October 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20210148244
- JP 2010258439 A